(19) **Europäisches Patentamt**
**European Patent Office**
**Office européen des brevets**

(11) **EP 2 305 743 A1**

(12) **EUROPEAN PATENT APPLICATION**

(43) Date of publication:
**06.04.2011 Bulletin 2011/14**

(51) Int Cl.:
**C08J 5/18** (2006.01)     **H01G 4/20** (2006.01)
**C08K 3/00** (2006.01)     **C08L 1/28** (2006.01)

(21) Application number: **10183820.9**

(22) Date of filing: **30.09.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **30.09.2009 US 570761**

(71) Applicant: **General Electric Company**
**Schenectady, NY 12345 (US)**

(72) Inventors:
• **Fang, Xiaomei**
 **Niskayuna, NY 12309 (US)**
• **Tan, Daniel Qi**
 **Niskayuna, NY 12309 (US)**
• **Cao, Yang**
 **Niskayuna, NY 12309 (US)**
• **Chen, Qin**
 **Niskayuna, NY 12309 (US)**
• **Irwin, Patricia Chapman**
 **Niskayuna, NY 12309 (US)**

(74) Representative: **Gray, Thomas et al**
**GE International Inc.**
**Global Patent Operation - Europe**
**15 John Adam Street**
**London WC2N 6LU (GB)**

(54) **Dielectric film, associated article and method**

(57)     An article having a cyanoresin dielectric film is described. The cyanoresin dielectric film includes nanostructures of a toughening material. A method of forming such a cyanoresin dielectric film is also described. A capacitor having a cyanoresin dielectric film is presented.

FIG. 1

**Description**

BACKGROUND

The invention relates generally to high energy density capacitors, and more particularly, to such capacitors incorporating a thin film of a polymer having a high dielectric constant and high breakdown strength. The invention further relates to a method of manufacturing such dielectric thin films, and to a capacitor comprising the same.

High energy density capacitors have become increasingly important in various industrial, military, and commercial operations. Polymer based capacitors are lightweight and compact and hence, are attractive for various land based and space applications. However, most of the dielectric polymers are characterized by low energy densities (<5 J/cc), and have low breakdown strength (<450 kV/mm), which may limit the operating voltage of the capacitor. In order to achieve high energy density, it may be desirable to have both high dielectric constant characteristics, and high breakdown strength. A trade-off between these two properties may not be advantageous.

Most of the dielectric polymers that exhibit high breakdown strength have a low dielectric constant. Typically, high dielectric-constant ceramic fillers are used to increase the dielectric constant of the polymer. Further increases in the dielectric constant of the polymer can be achieved by including a high concentration of the ceramic filler. For example, the polymer-ceramic composite with a dielectric constant equal to 150 has a ceramic filler loading density as high as 85% by volume, which is about 98% by weight. However, a high concentration of the ceramic filler not only decreases the mechanical flexibility of the composite, but also introduces interfacial defects and thus, lowers the breakdown strength of the composites.

The cyanoresin family of polymers have high dielectric constants ($\in$ >15), and are commercially available as film forming resins. Commercial-grade, high dielectric-constant cyanoresins have been available and widely used as coating materials for electroluminescent lamps. However, cyanoresins usually do not have enough mechanical strength to be processed into free-standing films for capacitor fabrication. Usually, the film cracks, due to embrittlement of the material.

The breakdown strength of some of these films has been reported to be below 200 kV/mm. These resins have been studied and processed for high quality films with high breakdown strength. However, pure cyanoresin films such as CR-C (cyanoethyl cellulose) and CR-E (cyanoethyl hydroxyethyl cellulose) are reported to be highly brittle. Hence, they are conventionally used only as blends with other polymers. CR-S (cyanoethyl pullulan) is another suitable polymer in terms of properties and processing.

Thus, there is a need to improve the toughness of cyanoresins without compromising their dielectric properties. It is also desirable to have a cyanoresin film having a high dielectric constant and a high breakdown strength, with improved mechanical strength over currently existing dielectric films.

BRIEF DESCRIPTION

Some embodiments of the invention provide an article including a cyanoresin dielectric film. The cyanoresin dielectric film includes nanostructures of a toughening material.

According to some embodiments of the invention, a capacitor is provided. The capacitor includes a cyanoresin dielectric film and at least one electrode coupled to the cyanoresin dielectric film. The cyanoresin dielectric film includes nanostructures of a toughening material.

In some embodiments, a method of forming a dielectric film is provided. The method includes the steps of dissolving a cyanoresin in a solvent to form a solution, and dispersing a toughening material in the solution. The method further includes the step of applying the solution to a substrate to form the dielectric film. The cyanoresin dielectric film includes nanostructures of the toughening material.

There follows a detailed description of embodiments of the invention by way of example only with reference to the accompanying drawings, in which:

FIG. 1 is a schematic representation of chemical structures of cyanoresins, according to one embodiment of the invention;

FIG. 2 illustrates a capacitor, according to one embodiment of the invention;

FIG. 3 is a flow chart of a method of forming a cyanoresin dielectric film, according to one embodiment of the invention;

FIG. 4 is a transmission electron micrograph of a cyanoresin dielectric film, according to one embodiment of the invention.

DETAILED DESCRIPTION

Approximating language, as used herein throughout the specification and claims, may be applied to modify any quantitative representation that could permissibly vary without resulting in a change in the basic function to which it is related. Accordingly, a value modified by a term or terms, such as "about," is not limited to the precise value specified. In some instances, the approximating language may correspond to the precision of an instrument for measuring the value.

In the following specification and claims, the singular forms "a", "an" and "the" include plural referents unless the context clearly dictates otherwise.

As used herein, the terms "may" and "may be" indicate a possibility of an occurrence within a set of circumstances; a possession of a specified property, characteristic or function; and/or qualify another verb by expressing one or more of an ability, capability, or possibility associated with the qualified verb. Accordingly, usage of "may" and "may be" indicates that a modified term is apparently appropriate, capable, or suitable for an indicated capacity, function, or usage, while taking into account that in some circumstances the modified term may sometimes not be appropriate, capable, or suitable. For example, in some circumstances, an event or capacity can be expected, while in other circumstances the event or capacity cannot occur - this distinction is captured by the terms "may" and "may be".

Some of the dielectric properties considered herein are the dielectric constant, the dielectric breakdown voltage or dielectric breakdown strength, and the energy density. The "dielectric constant" of a dielectric material is a ratio of the capacitance of a capacitor, in which the space between and around the electrodes is filled with the dielectric material, to the capacitance of the same configuration of electrodes in a vacuum. As used herein, "dielectric breakdown strength" refers to a measure of the dielectric breakdown resistance of a polymer composite (dielectric) material under an applied AC or DC voltage. The applied voltage prior to breakdown is divided by the thickness of the dielectric (polymer) material, to provide the breakdown strength value or breakdown voltage. It is generally measured in units of potential difference over units of length, such as kilovolts per millimeter (kV/mm).

The energy of a capacitor is generally calculated by the equation $E=(1/2)\,CV^2$, where C is the capacitance in farads (F), and V is the working voltage of the capacitor in volts (V). These relationships may also be expressed as a function of the electric field, E. If the dielectric constant K of the material does not change with the applied electric field E (in V/um), the electric energy density $U_E$ (in J/cc) stored in a capacitor can be calculated by

$$U_E = 1/2 \in_0 K\,E^2,$$

where $\in_0$ is the permittivity of vacuum. The highest electric field that can be applied to a material is called its dielectric breakdown strength. As used herein, the term "high temperatures" refers to temperatures above about 100 degrees Celsius (°C), unless otherwise indicated.

According to one embodiment of the invention, an article including a cyanoresin dielectric film is provided. The cyanoresin dielectric film includes nanostructures of a toughening material. As used herein, "toughening material" refers to an additive material, which increases mechanical strength of a base material (the cyanoresin) at least by about 5%.

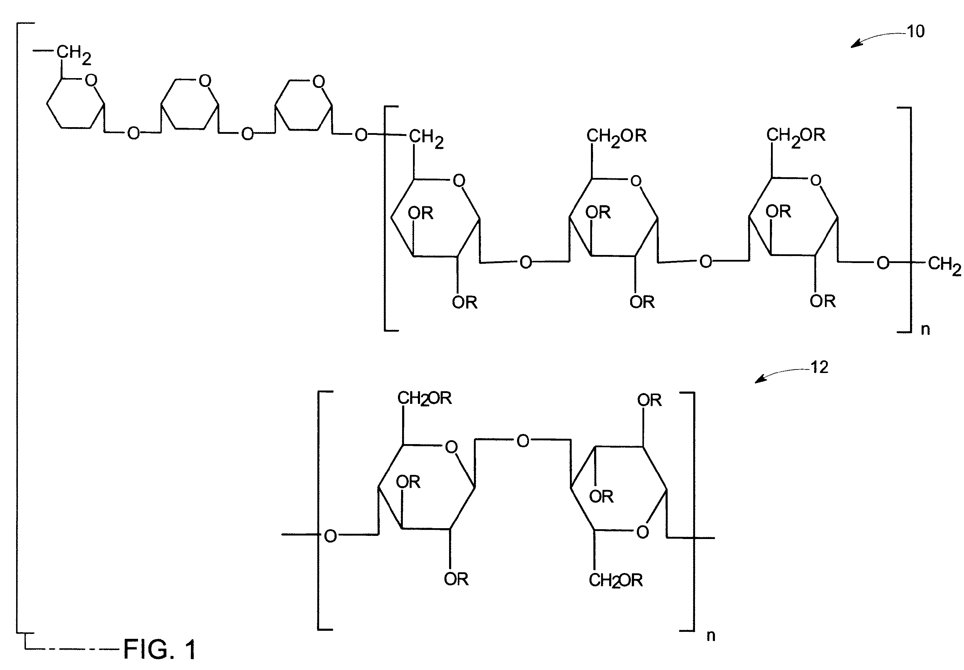

The dielectric film or layer is not limited to specific cyanoresins. Examples of suitable cyanoresins include, but are not limited to, cyanoethyl pullulan (CR-S resin), cyanoethyl polyvinylalcohol, cyanoethyl hydroxyethyl cellulose (CR-E), and cyanoethyl cellulose (CR-C resin). In one exemplary embodiment, the cyanoresin includes cyanoethyl cellulose. In another embodiment, the cyanoresin includes cyanoethyl pullulan. The structures of the repeating unit of the cyanoresins, for use in certain embodiments of the invention, are provided in FIG. 1. Schematic 10 shows the repeating unit of a CR-S resin, and schematic 12 shows the repeat units of a CR-C resin - where R is $-CH_2-CH_2-CN$ or H. A sufficient amount of the cyano group should be present to provide the desired nitrogen content. In the formula corresponding to schematic 12, each of the pendent $CH_2OR$ groups, individually, can alternatively be a $CH_2OR'$ group, wherein R' is $-CH_2-CH_2-OH$ or H. In some embodiments, a blend of cyanoresins may be used for the dielectric film.

The cyanoresins may have an aliphatic, aromatic or an aryloxy backbone. The cyanoresins have a nitrogen content based on CN groups. In certain embodiments, the nitrogen content is about 7% to about 15% by weight. In other embodiments, the nitrogen content is about 9% to about 13% by weight. The cyanoresins are usually characterized by a viscosity (20% N,N-dimethylformamide or DMF, solution at 20°C.) from about 100 centipoises (cP) to about 1000 cP. The CN group has a substantially high dipole moment and a substantially high mobility to reorient under electric fields, and may lead to a high dielectric constant. The CR-S resin has a dielectric constant of 19.5, and the CR-C resin has a dielectric constant of 16.5 at room temperature. The high dielectric constant of the cyanoresin, combined with its high breakdown strength, may facilitate high energy density.

The cyanoresin includes an effective amount of a toughening material. A primary purpose of the toughening material is to improve the toughness of cyanoresins for thin film formation. However, the specific toughening material, and its level, are selected to improve the mechanical strength, such as tensile strength of cyanoresins for film formation, and to maintain the dielectric properties of the cyanoresins.

Suitable toughening materials may include thermoplastic polymers. Non-limiting examples include acrylate block copolymers, aromatic polyimides, siloxane and imide block copolymers and the like. The aromatic polyimides are usually prepared from poly(amic acids). Aromatic polyimides are usually synthesized from aromatic dianhydrides and aromatic diamines. Examples of aromatic dianhydrides include, but are not limited to, benzophenone tetracarboxylic dianhydride (BTDA), Bisphenol A dianhydride, oxydiphthalic anhydride, and pyromellitic dianhydride. Examples of aromatic diamines include, but are not limited to, oxydianiline (ODA), phenylenediamine (PDA), bis-aminophenoxybenzene, and bis(aminophenoxy phenyl)propane.

Acrylate block copolymers usually include an ABA or ABC acrylate block configuration. A, B and C are each monomers blocks, and ABA or ABC represents a repeating unit in the acrylate block copolymer. Suitable examples of A include, but are not limited to, poly(methyl methacrylate). Suitable examples of B include, but are not limited to, polysiloxanes and polybutylacrylate/polybutadiene. Non-limiting examples of C include polystyrene.

In an exemplary embodiment, the repeating unit of the ABA acrylate block copolymer is PMMA-PBA-PMMA, wherein "PMMA" is poly(methyl methacrylate; and "PBA" is poly(butyl acrylate). In another exemplary embodiment, the repeating unit of an ABC acrylate block copolymer is PS-PBd-PMMA, wherein "PS" is polystyrene, "PBd" is polybutadiene, and "PMMA" is poly(methyl methacrylate. In a preferred embodiment, the acrylate block copolymers are ABA block copolymers, M22 and M22N (from Arkema, Inc.), and siloxane polyetherimide block copolymers (STM1700 from SABIC Innovative Plastics).

The most appropriate amount of the toughening material is usually determined by the application in which the material is being used, as well as the identity of the particular toughener. An "effective amount" of the toughening material is an amount sufficient to improve the toughness of the cyanoresin film, without significantly compromising its dielectric properties. Embodiments of the present invention may utilize cyanoresins containing at least about 10% by weight of the toughening material. Preferably, the toughening material (i.e., toughener) is present in an amount of about 10% to about 20% by weight.

Moreover, for embodiments of this invention, the toughening material is present in cyanoresins in the form of nanostructures. As used herein, the term "nanostructure" is meant to describe a structure having at least one region or characteristic dimension with a feature size of less than about 500 nanometers (nm), less than about 200 nm, less than about 100 nm, less than about 50 nm, or even less than about 20 nm. Examples of such structures include nanowires, nanorods, nanotubes, branched nanocrystals, nanotetrapods, tripods, bipods, nanocrystals, nanodots, nanoparticles and the like. Nanostructures can be substantially homogeneous in material properties. However, in other embodiments, the nanostructures can be heterogeneous. Nanostructures can be substantially crystalline (monocrystalline or polycrystalline), amorphous, or a combination thereof. Other features of the nanostructure can have a size in the micrometer or even millimeter range. In one aspect, at least one dimension of the nanostructure has a size less than about 500 nm, for example, less than about 200 nm, less than about 100 nm, less than about 50 nm, or even less than about 20 nm.

In certain embodiments, the cyanoresin dielectric film has a thickness in a range from about 0.1 micron to about 50 microns. In a particular embodiment, the dielectric film has a thickness in a range from about 0.1 micron to about 10 microns. As will be discussed in detail below, the dielectric breakdown strength of the dielectric film was found to be inversely proportional to the film thickness. Accordingly, the selected thickness of the dielectric film is, in part, dependent on the required energy density, and the processing feasibility. In certain embodiments, the dielectric films may have higher film thicknesses, for example, in a range from about 3 microns to about 50 microns.

In specific embodiments, filler particles are dispersed in the cyanoresin matrix. The filler particles may contribute positively towards the dielectric constant of the film, and hence may be advantageously utilized. These filler particles have been found to increase the dielectric constant and hence, the energy storage capacity, while maintaining all other high performance parameters, such as high resistivity, low dissipation factor, and high breakdown voltage.

In one embodiment, the filler particles comprise a ceramic material. The ceramic particles may be ferroelectric or antiferroelectric particles. The ferroelectric and antiferroelectric effect is an electrical phenomenon whereby certain ionic crystals may exhibit a spontaneous dipole moment. Examples of suitable ceramics include, but are not limited to, alumina, titania, zirconia, magnesia, zinc oxide, cesium oxide, yttria, silica, barium titanate, strontium titanate, lead zirconate, lead zirconium titanate, and various combinations of these. In one embodiment, preferred filler particles are antiferroelectric particles.

The antiferroelectric particles can be converted to ferroelectric particles upon the application of an electric field. Thus, the antiferroelectric particles are usually field-tunable, non-linear dielectric particles that can undergo a phase transition from a low dielectric state (antiferroelectric state) to a high dielectric state (ferroelectric state) upon being exposed to an electric field. A biasing electric field of less than or equal to about 100 kilovolts/millimeter is generally used to change the state of the antiferroelectric particles (from the antiferroelectric state to the ferroelectric state) that are incorporated into the cyanoresin. This biasing electric field can be accompanied by the application of heat to a sample. Heat may be applied in the form of convection, conduction or radiation to the sample during the application of the biasing electrical field.

The electric field aligns the filler particles into a columnar structure so as to give rise to a higher dielectric constant. Such antiferroelectric particles and their effect on dielectric properties of a polymer are described in a patent application (Publication No. US 20070117913A1) entitled "Antiferroelectric Polymer Composites, Methods of Manufacture Thereof, And Articles Comprising the Same" filed on November 23, 2005, which is incorporated herein by reference.

The filler particles are usually characterized by a mean particle size in a range from about 5 nanometers to about 500 nanometers. In one embodiment, the mean particle size is in a range from about 10 nanometers to about 100 nanometers. The filler particles are present at an appropriate amount, depending on some of the factors mentioned previously. Typically, the amount of the filler particles is less than about 60 weight percent of the weight of the cyanoresin. In one embodiment, the amount of the filler particles is in a range from about 0.1 weight percent to about 30 weight percent of the cyanoresin. In one embodiment, the amount of the filler particles is in a range from about 0.1 weight percent to about 20 weight percent of the cyanoresin. The particle size and the weight percent of filler particles may affect the film forming capability and hence, may be optimized appropriately.

The dielectric breakdown strength of the dielectric film may be in part controlled by the film composition, film thickness, and the quality of the film - usually defined by surface defects, film deposition, and surface chemical modification. Typically, for general embodiments of the invention, the dielectric film has a breakdown strength of at least about 200 kV/mm. In one embodiment, the dielectric film has a breakdown strength in a range from about 200 kV/mm to about 1000 kV/mm. In some preferred embodiments, the dielectric film has a breakdown strength in a range from about 300 kV/mm to about 700 kV/mm.

Thinner dielectric films usually exhibit higher breakdown strength values (the breakdown strength of the dielectric film can be improved by reducing the thickness of the film). The toughened dielectric films have good mechanical strength, and can be processed into freestanding films, even of reduced thickness. For example, a CRC film with 20 weight % of toughening material M22 (discussed above), and having a thickness of 15 microns, has shown a breakdown strength value of 400 kV/mm. Reduction of film thickness to 5.5 microns has been achieved with an improved breakdown strength of 570 kV/mm, respectively.

In one embodiment, the dielectric constant of the cyanoresin dielectric film may be in a range from about 10 to about 50. In another embodiment, the dielectric constant of the cyanoresin dielectric film may be in a range from about 10 to about 30. Moreover, in one embodiment, the cyanoresin dielectric film has a dissipation factor in a range from about 0.01 to about 0.1 at 1 kHz.

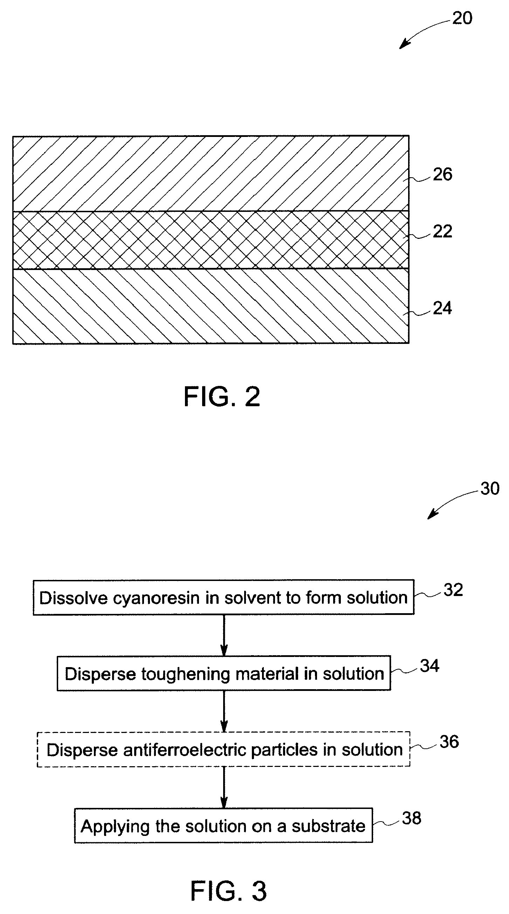

Embodiments of the present invention provide a capacitor, including a dielectric film and at least one electrode coupled to the dielectric film. FIG. 2 provides a simplified illustration of a capacitor 20, having a dielectric film 22 deposited on a substrate 24. The dielectric film 22 includes a cyanoresin. The cyanoresin dielectric film includes nanostructures of a toughening material. An electrode 26 is coupled to the dielectric film 22. Typically, the electrode 26 may include a layer of a conducting polymer or a metal. Commonly used metals include aluminum, stainless steel, titanium, zinc and copper. The electrode layer is typically thin, in the order of from about 50 Å to about 500 Å. In some embodiments, the capacitor may be a multilayer capacitor. In such embodiments, a number of dielectric films and electrode layers are alternately arranged to form a multilayer capacitor.

Substantially high dielectric constant values, and high breakdown strength values for the films, facilitate high-energy storage for the capacitors. In one embodiment, the energy density of the capacitor is at least about 5 J/cubic centimeters. In another embodiment, the energy density of the capacitor is at least about 10 J/cc. In yet another embodiment, the energy density of the capacitor is at least about 20 J/cc.

The capacitor may optionally include a capping layer disposed on the dielectric film. Examples of suitable capping layer materials include, but are not limited to, polycarbonate, cellulose acetate, polyetherimide, fluoropolymer, parylene, acrylate, silicon oxide, silicon nitride, and polyvinylidene fluoride. For particular embodiments, the capping layer has a thickness of less than about 10% of the thickness of the dielectric film. The capping layer may help in filling in or otherwise mitigating surface defects and hence, may improve the breakdown strength of the film. It should also be emphasized that the present invention is not limited to any particular type of capacitor, as long as the features described herein are present.

Embodiments of the present invention further provide a method 30 of forming a cyanoresin dielectric film, as illustrated in flow chart of FIG. 3. The method 30 includes the steps of dissolving a cyanoresin in a solvent to form a solution, step 32; dispersing a toughening material in the solution, step 34; and applying the solution to a substrate to form the dielectric film, step 38. The method may include an additional, optional step 36 of dispersing filler particles in the solution, prior to performing the step 38.

In step 32, the cyanoresin is dissolved in any suitable solvent. In particular embodiments, the solvent is selected from the group consisting of acetone, acetonitrile, cyclohexanone, furfuryl alcohol, tetrahydrofurfuryl alcohol, methyl acetoacetate, nitromethane, N,N-dimethylformamide (DMF), N-methyl-2-pyrrolidone (NMP), butyrolactone, propylene carbonate, and various combinations of these. In an exemplary embodiment, the solvent comprises N,N-dimethylformamide.

In step 34, the toughening material is dispersed in the solution by a suitable dispersion method. Examples of suitable dispersion techniques include, but are not limited to, melt-dispersion and solvent-dispersion. These dispersion techniques may also use additional energy, such as shear, compression, ultrasonic vibration, or the like, to promote homogenization of the toughening nanostructures with the cyanoresin. In one embodiment, a cyanoresin suspended in a fluid (e.g., a solvent) may be introduced into an ultrasonic sonicator along with the toughening nanostructures. The mixture may be solution-blended by sonication, for a time period effective to disperse the nanostructures within the cyanoresin and the fluid.

In some embodiments, the method 30 optionally includes a step 36 of dispersing filler particles in the solution prior to applying the solution to a substrate, step 38. The filler particles may also be dispersed within the cyanoresin along with or after dispersing the toughening material by the same dispersion techniques as discussed above.

The solution of the cyanoresin is applied to a substrate by any suitable process known in the art, in step 38. Examples of suitable coating processes include, but are not limited to, tape-casting, dip coating, spin coating, chemical vapor deposition, melt extrusion, and physical vapor deposition, such as sputtering. Typically, the dielectric film has a thickness of less than about 5 microns. In one preferred embodiment, the film may be applied by a tape-casting process. When the film thickness is substantially small, solution based coating techniques such as spin coating or dip coating may be used. In an exemplary embodiment, the film may be preferably applied by a spin coating process.

During film formation in the coating process, the molecular toughening material segregates from the cyanoresin and self-assembles into nanosized or microsized domains or nanostructures. This segregation of the toughening material occurs due to interaction between the cyano group and the toughening material. Those skilled in the art would be able to control the interaction between the cyano group and the toughening material and, thus, the characteristic dimension of the nanostructures by adjusting processing conditions, such as temperature, and the concentration of the toughening material and the cyanoresin in the solution. It should be understood that the dimension of the nanostructures varies with processing conditions.

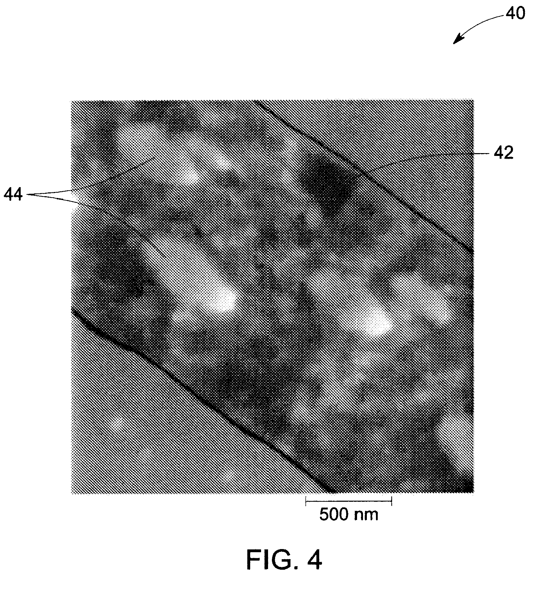

In some embodiments, the nanostructures have a characteristic dimension in a range of from about 50 nanometers to about 500 nanometers. In an exemplary embodiment, FIG. 4 shows a micrograph 40 of a cross sectional view of a nanotoughened cyanoethyl cellulose (CR-C) film 42. The micrograph is a transmission electron micrograph. The micrograph of FIG. 4 clearly shows nanostructures 44 of about 500 nm in their largest dimension, formed of the toughening material in the CR-C film 42.

Due in part to the formation of these toughening nanostructures, the cyanoresin dielectric film becomes flexible with good mechanical strength, which is essential for thin film development. Table 1 (below) shows tensile strength values for the nanotoughened CR-C dielectric films. Furthermore, these toughened cyanoresin films maintain their excellent dielectric properties, as shown in Table 2 (below). Thus, toughening of the cyanoresins enables thin film fabrication of the dielectric films with good mechanical strength.

According to the embodiments of the invention, the cyanoresin dielectric film may be improved by controlling the deposition conditions. For example, by performing the coating processes in a clean room environment, high quality thin films may be obtained. The cyanoresin films processed by the above processes showed unexpectedly high breakdown strength. In one embodiment, the cyanoresin dielectric film has a breakdown strength of at least about 300 kV/mm. In a particular embodiment, the cyanoresin dielectric film has a breakdown strength in a range from about 300 kV/mm to about 1000 kV/mm.

EXAMPLES

Example 1

10 grams of cyanoethyl cellulose (CR-C resin) powder was added into approximately 90 grams of solvent to prepare a solution with about 10% polymer by weight. The solution was stirred at room temperature with a magnetic stirrer for two hours to dissolve the CR-C resin. A toughening material, M22 (20 wt% of CR-C resin) was added into the solution. The M22 material was dissolved in the solution by a stirring process. The solution was then filtrated, using a 1-micron filter. The solution was then cast on a clean glass slide and dried at 100 degree Celsius for two hours. The toughened CR-C film was then peeled off from the glass slide and further dried in a vacuum oven overnight. Free-standing films of thicknesses from about 5.5 microns and about 15 microns were cast. Dielectric breakdown strength was then measured, generally following the ASTM D149 method. The top electrode and bottom electrodes were stainless steel plates. The film was immersed in clean insulation mineral oil, and direct current (DC) voltage was applied at a ramp rate of 500 V/s, until the sample failed. The dielectric breakdown strengths of nanotoughened CR-C films were found to be 400 kV/mm for a 5.5 micron-thick film, and 570 kV/mm for a 15 micron-thick film.

Example 2

CR-C films toughened with 5 wt%, 10 wt% and 20 wt% M22, each of about 12 micron thickness, were cast by the same process as discussed above in example 1. The tensile strength of each of the film was measured. Table 1 shows improved tensile strength of each of the nanotoughened CR-C (CR-C neat) films as compared to non-toughened CR-C film.

Table 1: Tensile strength of nanotoughened cyanoethyl cellulose (CR-C) films

| Cyanoresin Dielectric Film | Tensile Strength (ksi) |
|---|---|
| CR-C neat | 5.4 |
| CR-C+5%M22 | 6.2 |
| CR-C+10%M22 | 5.9 |
| CR-C+20%M22 | 5.9 |

Example 3

Nanotoughened CR-C dielectric films toughened with a different toughening material, M22, M22N, STM1700 (a siloxane polyetherimide block copolymer from SABIC) and BTDA-ODA/PDA (polyimide) of about 20 wt% of CRC resin were cast by the process as described above in example 1. Table 2 shows the dielectric constant of each film, along with non-toughened CR-C (CR-C neat) film. It is clear from the data that there is no substantial change in the dielectric constant, upon toughening the CR-C resin with the toughening materials.

Table 2: Dielectric constant of nanotoughened cyanoethyl cellulose (CR-C) films

| Cyanoresin Dielectric Film | Dielectric Constant at 1kHz |
|---|---|
| CR-C neat | 16.6 |
| CR-C+M22 | 13.4 |
| CR-C+M22N | 14.4 |
| CR-C+STM1700 | 18.3 |
| CR-C+ BTDA-ODA/PDA | 13.8 |

While only certain features of the invention have been illustrated and described herein, many modifications and changes will occur to those skilled in the art. It is, therefore, to be understood that the appended claims are intended to cover all such modifications and changes as fall within the true spirit of the invention.

For completeness, various aspects of the invention are now set out in the following numbered clauses:

1. An article, comprising a cyanoresin dielectric film, wherein the cyanoresin dielectric film comprises nanostructures of a toughening material.

2. The article of clause 1, wherein the cyanoresin dielectric film comprises at least one cyanoresin selected from the group consisting of cyanoethyl pullulan, cyanoethyl polyvinylalchohol, cyanoethyl hydroxyethyl cellulose, cyanoethyl cellulose or a combination thereof.

3. The article of clause 1, wherein the toughening material comprises a thermoplastic polymer.

4. The article of clause 3, wherein the thermoplastic polymer comprises an acrylate block copolymer.

5. The article of clause 3, wherein the thermoplastic polymer comprises aromatic polyimides formed from poly(amic-acids).

6. The article of clause 1, wherein the cyanoresin dielectric film comprises at least about 10% by weight of the toughening material.

7. The article of clause 1, wherein the cyanoresin dielectric film has a thickness in a range from about 0.1 micron to about 50 microns.

8. The article of clause 7, wherein the cyanoresin dielectric film has a thickness in a range from about 0.1 micron to about 10 microns.

9. The article of clause 1, wherein the toughening material is dispersed within the cyanoresin.

10. The article of clause 1, wherein the cyanoresin dielectric film further comprises filler particles dispersed in the cyanoresin.

11. The article of clause 10, wherein the filler particles comprise a ceramic.

12. The article of clause 11, wherein the filler particles comprise a ferroelectric or an antiferroelectric material.

13. The article of clause 12, wherein the filler particles are oriented parallel to an electric field.

14. The article of clause 13, wherein the electric field aligns the particles in a columnar structure.

15. The article of clause 10, wherein the mean particle size of the filler particles is in a range from about 5 nanometers to about 200 nanometers.

16. The article of clause 15, wherein the mean particle size of the filler particles is in a range from about 5 nanometers to about 100 nanometers.

17. The article of clause 1, wherein the cyanoresin dielectric film has a breakdown strength in a range from about 200 kV/mm to about 1000 kV/mm.

18. The article of clause 17, wherein the cyanoresin dielectric film has a breakdown strength in a range from about 400 kV/mm to about 700 kV/mm.

19. The article of clause 1, wherein the cyanoresin dielectric film has a dissipation factor in a range from about 0.01 to about 0.1 at 1 kHz.

20. The article of clause 1, wherein the cyanoresin dielectric film has a dielectric constant in a range from about 10 to about 50.

21. The article of clause 20, wherein the cyanoresin dielectric film has a dielectric constant in a range from about 10 to about 20.

22. A capacitor, comprising:

a cyanoresin dielectric film; and
at least one electrode coupled to the cyanoresin dielectric film, wherein the cyanoresin dielectric film comprises nanostructures of a toughening material.

23. The capacitor of clause 22, having an energy density of at least about 5 J/cc.

24. A method of forming a cyanoresin dielectric film, the method comprising the steps of:

dissolving a cyanoresin in a solvent to form a solution;

dispersing a toughening material in the solution; and

applying the solution to a substrate to form the cyanoresin dielectric film, wherein the cyanoresin dielectric film comprises nanostructures of the toughening material.

25. The method of clause 24, wherein the step of dispersing the toughening material is carried out by a melt dispersion technique or a solvent dispersion technique.

**Claims**

1. An article, comprising a cyanoresin dielectric film, wherein the cyanoresin dielectric film comprises nanostructures of a toughening material.

2. The article of claim 1, wherein the cyanoresin dielectric film comprises at least one cyanoresin selected from the group consisting of cyanoethyl pullulan, cyanoethyl polyvinylalchohol, cyanoethyl hydroxyethyl cellulose, cyanoethyl cellulose or a combination thereof.

3. The article of claim 1 or 2, wherein the toughening material comprises a thermoplastic polymer.

4. The article of claim 3, wherein the thermoplastic polymer comprises a thermoplastic polymer or an acrylate block copolymer.

5. The article of claim 3 or 4, wherein the thermoplastic polymer comprises aromatic polyimides formed from poly(amic-acids).

6. The article of any of the preceding claims, wherein the cyanoresin dielectric film comprises at least about 10% by weight of the toughening material.

7. The article of any of the preceding claims, wherein the cyanoresin dielectric film has a thickness in a range from about 0.1 micron to about 50 microns.

8. The article of claim 7, wherein the cyanoresin

9. The article of any of the preceding claims, wherein the toughening material is dispersed within the cyanoresin.

10. The article of any of the preceding claims, wherein the cyanoresin dielectric film further comprises filler particles dispersed in the cyanoresin, wherein the filler particles comprise a ferroelectric or an antiferroelectric material.

11. The article of any of the preceding claims, wherein the cyanoresin dielectric film has a breakdown strength in a range from about 200 kV/mm to about 1000 kV/mm.

12. A capacitor, comprising:

   a cyanoresin dielectric film; and
   at least one electrode coupled to the cyanoresin dielectric film, wherein the cyanoresin dielectric film comprises nanostructures of a toughening material.

13. The capacitor of claim 12, having an energy density of at least about 5 J/cc.

14. A method of forming a cyanoresin dielectric film, the method comprising the steps of:

   dissolving a cyanoresin in a solvent to form a solution;
   dispersing a toughening material in the solution; and
   applying the solution to a substrate to form the cyanoresin dielectric film, wherein the cyanoresin dielectric film comprises nanostructures of the toughening material.

15. The method of claim 14, wherein the step of dispersing the toughening material is carried out by a melt dispersion technique or a solvent dispersion technique.

EP 2 305 743 A1

FIG. 1

**FIG. 2**

Dissolve cyanoresin in solvent to form solution — 32

Disperse toughening material in solution — 34

Disperse antiferroelectric particles in solution — 36

Applying the solution on a substrate — 38

**FIG. 3**

FIG. 4

**Europäisches Patentamt**
**European Patent Office**
**Office européen des brevets**

# EUROPEAN SEARCH REPORT

Application Number

EP 10 18 3820

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 490 035 A (YEN SHIAO-PING S [US] ET AL) 6 February 1996 (1996-02-06) <br> * column 1, line 14 - line 18 * <br> * column 2, line 33 - line 42 * <br> * column 5, line 10 - line 28 * <br> * column 6, line 18 - line 21 * <br> * column 6, line 45 - column 7, line 17; table 2 * <br> * claims 1-7 * | 1-4,6-9, 11-15 | INV. <br> C08J5/18 <br> H01G4/20 <br><br> ADD. <br> C08K3/00 <br> C08L1/28 |
| X | DATABASE WPI <br> Week 200464 <br> Thomson Scientific, London, GB; <br> AN 2004-655603 <br> XP002618992, <br> -& JP 2004 241527 A (RICOH KK) <br> 26 August 2004 (2004-08-26) <br> * abstract * <br> * paragraph [0048]; example 1 * <br> * claims 10, 11 * | 1-3,5-9, 11-15 | |
| X | WO 2007/066967 A1 (LG CHEMICAL LTD [KR]; LEE SANG-YOUNG; SEO DAE-JONG [KR]; SOHN JOON-YON) 14 June 2007 (2007-06-14) <br> * page 23, line 18 - line 20 * <br> * page 26, line 13 - page 27, line 7; example 1 * <br> * page 28, line 7 - page 29, line 15; examples 2-6 and comparative example 1 * <br> * claims 1, 8-14, 20-26 * | 1-15 | TECHNICAL FIELDS SEARCHED (IPC) <br><br> H01G <br> H01B <br> C08J |
| X,P | EP 2 133 892 A1 (GEN ELECTRIC [US]) 16 December 2009 (2009-12-16) <br> * paragraph [0078] * <br> * paragraph [0080] * <br> * 1 - 3, 4, 6, 25,29, 40; paragraph [0084] * <br> * claims 1, 3, 4, 5, 14 * | 1-4,6-13 | |

-/--

The present search report has been drawn up for all claims

| Place of search | Date of completion of the search | Examiner |
|---|---|---|
| Munich | 28 January 2011 | Siemsen, Beatrice |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 10 18 3820

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2005/036563 A2 (RENSSELAER POLYTECH INST [US]; SIEGEL RICHARD W [US]; SCHADLER-FEIST L) 21 April 2005 (2005-04-21) * paragraph [0016] * * paragraph [0018] * * claims 19, 22, 24, 26, 27 * ----- | 1-15 | |

TECHNICAL FIELDS
SEARCHED (IPC)

The present search report has been drawn up for all claims

| Place of search | Date of completion of the search | Examiner |
|---|---|---|
| Munich | 28 January 2011 | Siemsen, Beatrice |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                    
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 10 18 3820

This annex lists the patent family members relating to the patent documents cited in the above-mentioned European search report.
The members are as contained in the European Patent Office EDP file on
The European Patent Office is in no way liable for these particulars which are merely given for the purpose of information.

28-01-2011

| Patent document cited in search report | | Publication date | Patent family member(s) | | Publication date |
|---|---|---|---|---|---|
| US 5490035 | A | 06-02-1996 | NONE | | |
| JP 2004241527 | A | 26-08-2004 | JP | 4272441 B2 | 03-06-2009 |
| WO 2007066967 | A1 | 14-06-2007 | CA | 2632364 A1 | 14-06-2007 |
| | | | CN | 101326658 A | 17-12-2008 |
| | | | EP | 1972017 A1 | 24-09-2008 |
| | | | JP | 2009518809 T | 07-05-2009 |
| | | | US | 2008292968 A1 | 27-11-2008 |
| EP 2133892 | A1 | 16-12-2009 | CN | 101602891 A | 16-12-2009 |
| | | | JP | 2009299062 A | 24-12-2009 |
| | | | US | 2009309259 A1 | 17-12-2009 |
| WO 2005036563 | A2 | 21-04-2005 | CN | 1902716 A | 24-01-2007 |
| | | | EP | 1656682 A2 | 17-05-2006 |
| | | | JP | 2007503101 T | 15-02-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 20070117913 A1